# EUROPEAN PATENT APPLICATION

(11) **EP 3 372 840 A1**
(43) Date of publication of application: **12.09.2018**
(21) Application number: 18158505.0
(22) Date of filing: 26.02.2018
(51) Int. Cl.: F04D 29/057, F04D 29/66, F04D 29/063

(54) **TURBO COMPRESSOR**

(30) Priority: 06.03.2017 JP 2017041628
(71) Applicant: Panasonic Intellectual Property Management Co., Ltd., Osaka-shi, Osaka 540-6207 (JP)
(72) Inventor: SHOYAMA, Tadayoshi, Osaka 540-6207 (JP); OGATA, Takeshi, Osaka 540-6207 (JP); KONDO, Akihiro, Osaka 540-6207 (JP); TAMURA, Tomoichiro, Osaka 540-6207 (JP)
(74) Representative: Eisenführ Speiser

(57) **Abstract**

A turbo compressor includes a rotating shaft, a cylindrical bearing, and a partition. The cylindrical bearing supports the rotating shaft at least in a radial direction. The partition has an inner surface and an outer surface. The inner surface defines a first squeeze film damper with the outer surface of the bearing in the radial direction of the rotating shaft. The outer surface defines the second squeeze film damper outwardly of the first squeeze film damper in the radial direction of the rotating shaft. The partition separates the first squeeze film damper and the second squeeze film damper.

## Description

### BACKGROUND

### 1. Technical Field

The present disclosure relates to a turbo compressor.

### 2. Description of the Related Art

Conventional heat pump devices using a turbo compressor are known. For instance, Japanese Unexamined Patent Application Publication No. 2001-165514 describes a heat pump device includes a compressor having a centrifugal impeller. The centrifugal impeller is directly mounted on both ends of the shaft of an electric motor. The bearing of the shaft of the electric motor is operated utilizing water.

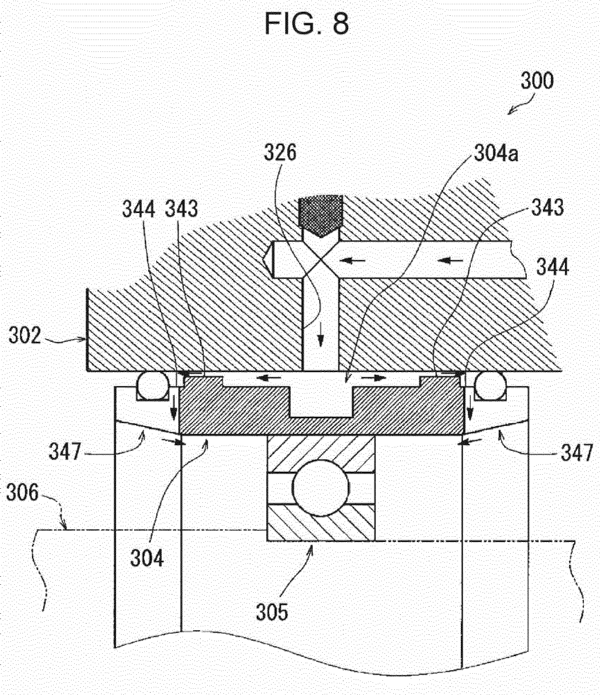

Japanese Unexamined Patent Application Publication No. 2013-204740 describes a bearing support structure 300 as illustrated in Fig. 8. In the bearing support structure 300, oil is supplied between an outer circumferential surface 304a of a bearing case 304 and a bearing housing 302, thereby forming a squeeze film damper section. The bearing housing 302 includes an oil supply path 326. The bearing case 304 includes a large diameter section 343 corresponding to the squeeze film damper section, a circular oil-drain groove 344, and oil-drain ports 347. The oil which has passed the large diameter portion 343 arrives at the oil-drain groove 344, and is discharged through the oil-drain ports 347. Thus, in the bearing support structure 300, stable damping characteristics are obtained. At least one of the oil-drain ports 347 is disposed vertically upward of the axial center of a rotating shaft 306. Therefore, part of the oil which flows out through the oil-drain ports 347 can be supplied to the bearing 305. The supplied oil to achieve the effect of a squeeze film damper also serves as lubricating oil of the bearing 305 at the same time, and thus a simplified configuration and a reduced manufacturing cost can be achieved.

### SUMMARY

According to the techniques described in Japanese Unexamined Patent Application Publication Nos. 2001-165514 and 2013-204740, there is room for providing more advantageous technology to improve the reliability of turbo compressor. One non-limiting and exemplary embodiment provides a technique that is more advantageous for improving the reliability of turbo compressor.

In one general aspect, the techniques disclosed here feature a turbo compressor including: a rotating shaft; a cylindrical bearing that supports the rotating shaft at least in a radial direction; and a partition having an inner surface and an outer surface, the inner surface defining a first squeeze film damper with an outer surface of the bearing in the radial direction of the rotating shaft, the outer surface defining a second squeeze film damper outwardly of the first squeeze film damper in the radial direction of the rotating shaft, the partition separates the first squeeze film damper and the second squeeze film damper.

The above-mentioned turbo compressor has high reliability.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### BRIEF DESCRIPTION OF THE DRAWINGS

Fig. 1 is a sectional view illustrating an example of a turbo compressor of the present disclosure;
Fig. 2 is an enlarged sectional view of part of the turbo compressor illustrated in Fig. 1;
Fig. 3 is a sectional view taken along line III-III illustrated in Fig. 2;
Fig. 4 is a sectional view illustrating a turbo compressor according to a modification;
Fig. 5A is a sectional view illustrating another example of the turbo compressor of the present disclosure;
Fig. 5B is a sectional view of a turbo compressor according to another modification;
Fig. 6 is a sectional view of a turbo compressor according to still another modification;
Fig. 7 is a sectional view of a turbo compressor according to still another modification; and
Fig. 8 is a sectional view illustrating a bearing support structure in related art.

### DETAILED DESCRIPTION

### <Underlying Knowledge Forming Basis of the Present Disclosure>

In a large size heat pump cycle device or a refrigerating cycle device, a turbo compressor that increases the pressure of cooling medium by rotational kinetic energy may be used. In this case, in order to achieve both high output and miniaturization, the turbo compressor is preferably used in high speed rotation (for instance, at least 20,000 revolutions per minute (rpm)). However, when a rotational body is rotated at a high speed in a turbo compressor, the peripheral speed of the bearing is high, and significant friction loss occurs. As in the technique described in Japanese Unexamined Patent Application Publication No. 2001-165514, the friction loss in the bearing can be reduced by using lubricating liquid with a low viscosity, such as water.

However, use of lubricating liquid with a low viscosity reduces the damping coefficient of the bearing. Thus, at a resonance point of the rotational body, a damping ratio at a critical speed may be reduced, and vibration may increase. Even when the critical speed can be exceeded by the rotational speed of the rotational body, when the rotational body rotates at a high speed, an unstable component occurs in the stiffness coefficient of the bearing itself, and when the stiffness coefficient exceeds the damping coefficient, self-excited vibration such as whirl occurs. Thus, in bearing design, it is necessary to stabilize the rotation of the rotational body by reducing resonance and self-excited vibration. In order to cope with these problems, a configuration may be adopted in which a squeeze film damper is formed outwardly of the bearing in the radial direction of the rotating shaft. For instance, a slight clearance is defined between the outer surface of the bearing and the inner surface of a bearing housing which houses the bearing, and a viscous fluid is supplied to the clearance, and thus a squeeze film damper exhibits its function. In this case, the dimensions of the clearance between the outer surface of the bearing and the inner surface of the housing are varied with vibration in the squeeze film damper, and an attenuation effect of vibration is achieved by viscous resistance generated by the variation in the dimensions.

As described in "The Second Volume of Vibration of Rotating Machinery, Applications of Analysis, Troubleshooting and Diagnosis, Matsushita O., Tanaka M., Kobayashi M., Koike H. and Kanki H., First Edition, Corona Publishing Co., Ltd. December 5, 2012, p.239", the damping coefficient of a squeeze film damper is proportional to the viscous coefficient of viscous fluid which forms a liquid film in the squeeze film damper. In addition, the damping coefficient of a squeeze film damper is inversely proportional to the third power of the ratio (c/L) of radial clearance c to axial length L of the squeeze film damper. When liquid with a low viscosity (for instance, the viscosity at 20°C is 0.01 Pa·s or less) such as coolant liquid is used as a liquid film in a squeeze film damper, the radial clearance c has to be extremely smaller than the length L in order to obtain desired damping performance. Thus, in the case where the viscosity of viscous fluid which forms a liquid film in the squeeze film damper is low, when the bearing is inclined with an inclination of c/L of higher, members included in the squeeze film damper including the bearing come into contact with each other at the end of the squeeze film damper. Therefore, the damping performance to be exhibited by the squeeze film damper is reduced. Thus, the inventors have studied intensively to create a squeeze film damper that has damping performance unlikely to be reduced even when the bearing is assembled with an inclination. As a result, the inventors have devised a turbo compressor in the present disclosure. It is to be noted that the above-mentioned knowledge is based on the study of the inventors and is not acknowledged in related art.

A first aspect of the present disclosure provides a turbo compressor including: a rotating shaft; a cylindrical bearing that supports the rotating shaft at least in a radial direction; and a partition having an inner surface and an outer surface, the inner surface defining an outer surface of the bearing in the radial direction of the rotating shaft, and a first squeeze film damper, the outer surface defining a second squeeze film damper outwardly of the first squeeze film damper in the radial direction of the rotating shaft, the partition separating the first squeeze film damper and the second squeeze film damper.

According to the first aspect of the present disclosure, an allowable inclination of the bearing is determined by the total of the thickness of the first squeeze film damper and thickness of the second squeeze film damper. For this reason, the allowable inclination of the bearing can be easily increased, and even when the bearing is assembled with an inclination, the damping performance of the squeeze film dampers is not likely to be reduced. In addition, it is easy to increase the damping performance of the entire squeeze film damper by appropriately adjusting the total of the thickness of the first squeeze film damper and thickness of the second squeeze film damper. Consequently, the reliability of the turbo compressor can be advantageously improved.

A second aspect of the present disclosure provides the turbo compressor according to the first aspect, further including: a bearing housing that has an inner surface disposed outwardly of the partition in the radial direction of the rotating shaft, and houses the bearing; and at least one pair of elastic bodies that are disposed apart from each other in an axial direction of the rotating shaft and are in contact with the outer surface of the bearing and the inner surface of the bearing housing in the radial direction of the rotating shaft. According to the second aspect, the bearing is elastically mounted on the bearing housing by at least one pair of elastic bodies. At least one pair of elastic bodies are deformed by the vibration of the bearing, and the size of the clearance between the outer surface of the bearing and the inner surface of the bearing housing is varied. Thus, the vibration of the bearing is likely to be attenuated more reliably by the first squeeze film damper and the second squeeze film damper.

A third aspect of the present disclosure provides the turbo compressor according to the first or second aspect, in which the partition has a through hole that extends in the radial direction of the rotating shaft. According to the third aspect, viscous fluid which forms a liquid film is likely to be supplied from the first squeeze film damper to the second squeeze film damper or from the second squeeze film damper to the first squeeze film damper. Consequently, the first squeeze film damper and the second squeeze film damper are likely to exhibit desired damping performance.

A fourth aspect of the present disclosure provides the turbo compressor according to any one the first to third aspects, further including: a pair of inner-side elastic bodies that are disposed apart from each other in the axial direction of the rotating shaft between the outer surface of the bearing and the inner surface of the partition. According to the fourth aspect, the partition is supported by a pair of inner-side elastic bodies, and thus the inner surface of the partition can be prevented from coming into contact with the outer surface of the bearing. Consequently, the first squeeze film damper and the second squeeze film damper are likely to exhibit desired damping performance.

A fifth aspect of the present disclosure provides the turbo compressor according to the first aspect, further including: a bearing housing that has an inner surface disposed outwardly of the partition in the radial direction of the rotating shaft, and houses the bearing; and a pair of outer-side elastic bodies that are disposed apart from each other in the axial direction of the rotating shaft between the inner surface of the bearing housing and the outer surface of the partition. According to the fifth aspect, the outer surface of the partition can be prevented from coming into contact with the inner surface of the bearing housing by the pair of outer-side elastic bodies. Consequently, the first squeeze film damper and the second squeeze film damper are likely to exhibit desired damping performance.

A sixth aspect of the present disclosure provides the turbo compressor according to the second aspect, in which the at least one pair of elastic bodies includes a pair of elastic bodies in contact with the outer surface of the bearing and the inner surface of the partition, and a pair of elastic bodies in contact with the outer surface of the partition and the inner surface of the bearing housing. According to the sixth aspect, the partition can be prevented from coming into contact with the outer surface of the bearing and the inner surface of the bearing housing, and thus the first squeeze film damper and the second squeeze film damper are likely to exhibit desired damping performance more reliably.

A seventh aspect of the present disclosure provides the turbo compressor according to the first aspect, further including: an elastic member that connects a wall surface disposed at a position away from the partition in the axial direction of the rotating shaft, and the partition. According to the seventh aspect, the partition is unlikely to come into contact with the outer surface of the bearing or the inner surface of the bearing housing, and thus the first squeeze film damper and the second squeeze film damper are likely to exhibit desired damping performance.

An eighth aspect of the present disclosure provides the turbo compressor according to any one the first to third aspects, in which the partition is composed of rubber. According to the eighth aspect, the partition is composed of rubber, and thus the partition forms a concave surface during positive squeeze of the first squeeze film damper or the second squeeze film damper, and the viscous fluid forming a liquid film is unlikely to flow out from the squeeze film dampers. In addition, the partition forms a convex surface during negative squeeze, and the viscous fluid which should form a liquid film is likely to flow out. Thereby, the damping performance of the first squeeze film damper or the second squeeze film damper is increased.

A ninth aspect of the present disclosure provides the turbo compressor according to any one the first to eighth aspects, further including a bearing housing that has an inner surface disposed outwardly of the partition in the radial direction of the rotating shaft, and houses the bearing, the inner surface defining the second squeeze film damper.

Hereinafter, embodiments of the present disclosure will be described with reference to the drawings. It is to be noted that the following embodiments are merely exemplary embodiments of the present disclosure, and the present disclosure is not necessarily limited to these embodiments.

### <First Embodiment

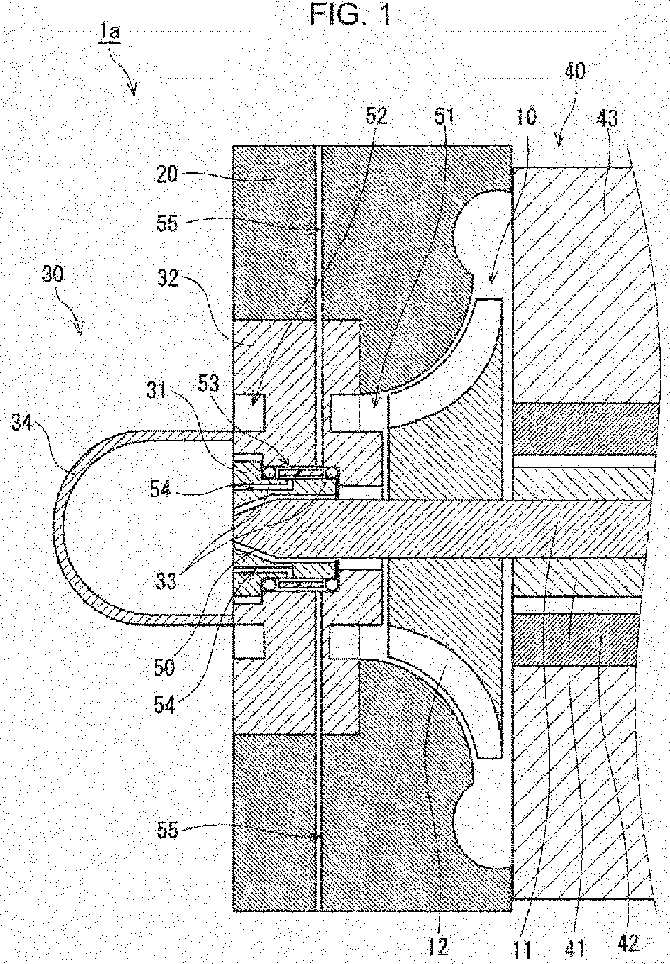

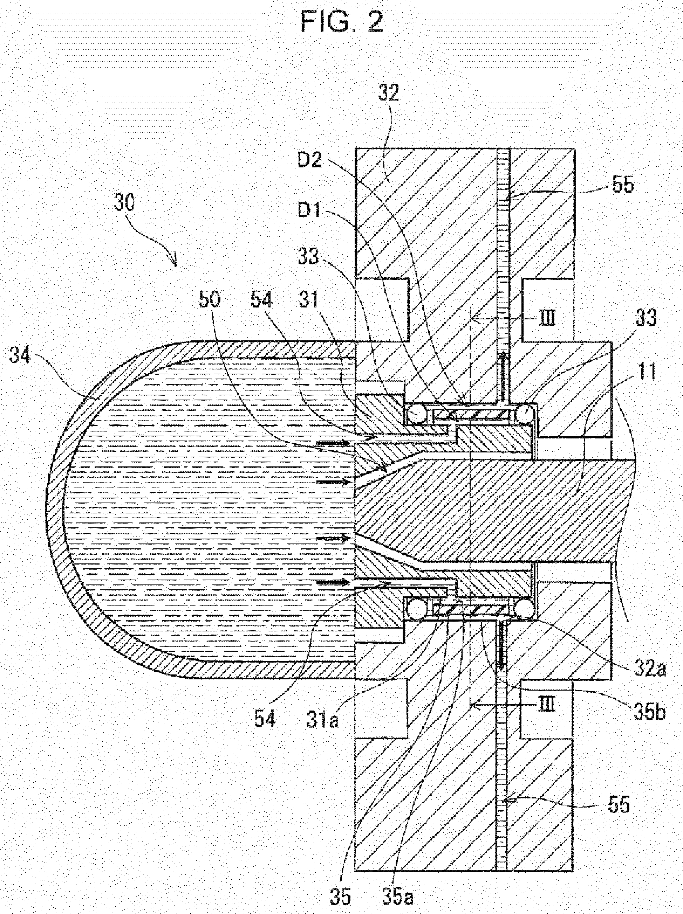

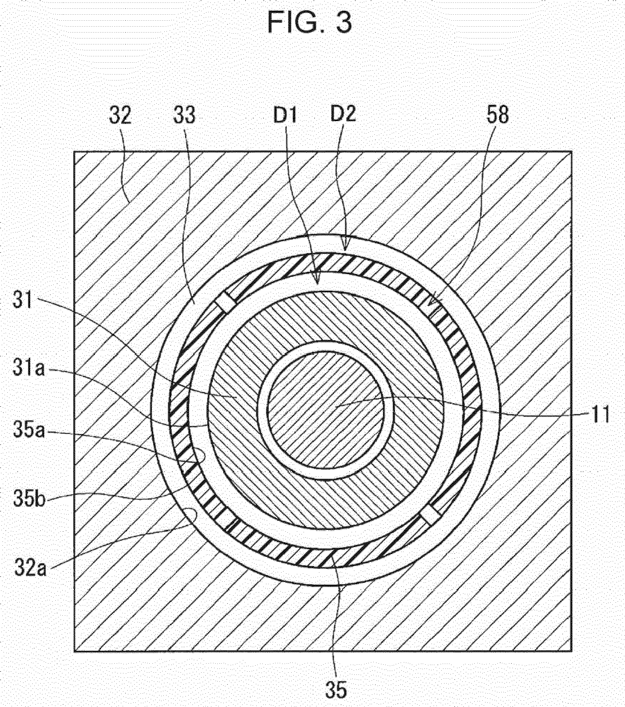

As illustrated in Fig. 1, a turbo compressor 1a includes a rotating shaft 11, a cylindrical bearing 31, and a partition 35. The bearing 31 supports the rotating shaft 11 at least in a radial direction. As illustrated in Figs. 2 and 3, the partition 35 has an inner surface 35a and an outer surface 35b. The inner surface 35a is a surface that defines a first squeeze film damper D1 with an outer surface 31a of the bearing 31 in the radial direction of the rotating shaft 11. In other words, the first squeeze film damper D1 is defined by the inner surface 35a of the partition 35 and the outer surface 31a of the bearing 31. The outer surface 35b is a surface that defines a second squeeze film damper D2 outwardly of the first squeeze film damper D1 in the radial direction of the rotating shaft 11.

The thickness of the first squeeze film damper D1 and the thickness of the second squeeze film damper D2 are denoted by c1 and c2, respectively, and the length of the partition 35 in the axial direction of the rotating shaft 11 is denoted by L. In order to avoid contact between the members included in the first squeeze film damper D1 and the second squeeze film damper D2 at the ends of the first squeeze film damper D1 and the second squeeze film damper D2, allowable inclination of the bearing 31 is determined to be (c1 + c2)/L. In this manner, an allowable inclination of the bearing 31 is determined by the total of the thickness of the first squeeze film damper D1 and the thickness of the second squeeze film damper D2, and thus the allowable inclination of the bearing 31 is easily increased, and even when the bearing 31 is assembled with an inclination, the damping performance of the first squeeze film damper D1 and the second squeeze film damper D2 is unlikely to be reduced. In addition, the damping performance of the entire squeeze film damper is easily increased by appropriately adjusting the total of the thickness c1 of the first squeeze film damper D1 and thickness c2 of the second squeeze film damper D2.

For instance, a turbo compressor according to a reference example, configured in the same manner as the turbo compressor 1a except that only one squeeze film damper is disposed outwardly of the bearing 31 in the radial direction of the rotating shaft 11, will be discussed. The thickness of the squeeze film damper of the turbo compressor according to a reference example is denoted by c. Also, for instance, it is assumed that the following relationship holds: c1 = c2 = 2^{(-1/3)} x c ≈ 0.7937c. In this case, the damping coefficient of the first squeeze film damper D1 and the second squeeze film damper D2 matches the damping coefficient of the squeeze film damper according to the reference example. In other words, the first squeeze film damper D1 and the second squeeze film damper D2 have the same damping capability as the squeeze film damper according to the reference example. The allowable inclination of the bearing 11 in the reference example is c/L, whereas the allowable inclination of the bearing 11 in the turbo compressor 1a is (c1+c2)/L, which is 1.5874 times the allowable inclination of the bearing 11 in the reference example.

As illustrated in Fig. 2, the turbo compressor 1a further includes a bearing housing 32. The bearing housing 32 has an inner surface 32a disposed outwardly of the partition 35 in the radial direction of the rotating shaft 11, and houses the bearing 31. In this case, the turbo compressor 1a further includes, for instance, at least one pair of elastic bodies 33. The at least one pair of elastic bodies 33 are disposed apart from each other in the axial direction of the rotating shaft 11. In addition, the at least one pair of elastic bodies 33 are in contact with the outer surface 31a of the bearing 31 and the inner surface 32a of the bearing housing 32 in the radial direction of rotating shaft 11. Therefore, the bearing 31 is elastically mounted on the bearing housing 32. The at least one pair of elastic bodies 33 are deformed by the vibration of the bearing 31, and thus the size of the clearance between the outer surface 31a of the bearing 31 and the inner surface 32a of the bearing housing 32 is varied. In this case, the vibration of the bearing 31 is likely to be attenuated more reliably by the first squeeze film damper D1 and the second squeeze film damper D2. As illustrated in Fig. 2, the outer surface 31a of the bearing 31, the inner surface 35a of the partition 35, the outer surface 35b of the partition 35, and the inner surface 32a of the bearing housing 32 are provided in that order in the radial direction of rotating shaft 11 in ascending order of the distance from the rotating shaft 11. The outer surface 31a of the bearing 31, the inner surface 35a of the partition 35, the outer surface 35b of the partition 35, and the inner surface 32a of the bearing housing 32 each extend in a direction crossing the radial direction of the rotating shaft 1.

The second squeeze film damper D2 is defined by the outer surface 35b of the partition 35 and the inner surface 32a of the bearing housing 32, for instance.

The pair of elastic bodies 33 is, for instance, an O-ring.

As illustrated in Fig. 3, the partition 35 has, for instance, a through hole 58 that extends in the radial direction of the rotating shaft 11. The viscous fluid which forms a liquid film is likely to be supplied from the first squeeze film damper D1 to the second squeeze film damper D2 or from the second squeeze film damper D2 to the first squeeze film damper D1 through the through hole 58. Consequently, the first squeeze film damper D1 and the second squeeze film damper D2 are likely to exhibit desired damping performance.

As illustrated in Fig. 3, the partition 35 has multiple (four in Fig. 3) through holes 58, for instance. In this case, multiple through holes 58 are regularly disposed in the circumferential direction of the rotating shaft 11, for instance.

The partition 35 encloses the outer surface 31a of the bearing 31 over the entire circumference in the circumferential direction of the rotating shaft 11. In other words, the partition 35 is cylindrical. The partition 35 may include multiple partitions 35 disposed apart from each other in the circumferential direction of the rotating shaft 11. The partition 35 is composed of a sheet-like or a film-like member. The partition 35 is, for instance, made of metal, made of alloy, or made of resin.

As illustrated in Fig. 1, the turbo compressor 1a includes, for instance, a rotational body 10, a housing 20, a bearing device 30, and an electric motor 40. The turbo compressor 1a is used in a refrigerating cycle device that uses a cooling medium containing water as the major component, for instance. The "major component" in the present description refers to the component contained the most in mass.

The rotational body 10 is formed by a rotating shaft 11 and an impeller 12. The rotating shaft 11 is a cylindrical member extending horizontally, for instance. The impeller 12 is fixed to the rotating shaft 11 inside the housing 20. The rotational body 10 may have one impeller 12, or may have two or more impellers 12.

As illustrated in Fig. 2, the bearing device 30 includes the bearing 31, the bearing housing 32, the pair of elastic bodies 33, and a lubricating liquid tank 34. The bearing 31 is disposed at a position closer the end of the rotating shaft 11 than the impeller 12, for instance. The bearing 31 is, for instance, a fluid bearing and has an inner surface that defines a bearing clearance 50 between the outer surface of the rotating shaft 11 and the bearing 31. Due to the presence of lubricating liquid in the bearing clearance 50, the bearing 31 supports the load of the rotational body 10 at least in a radial direction. The lubricating liquid contains, as the major component, the same type of component as the major component (water) of the cooling medium, for instance. The bearing housing 32 is fixed to the inner surface of the housing 20, and houses the bearing 31 inside the bearing housing 32. The lubricating liquid tank 34 is fixed to the end face of the bearing housing 32 in the axial direction of the rotating shaft 11. The bearing housing 32 is disposed between the lubricating liquid tank 34 and the impeller 12 in the axial direction of the rotating shaft 11. The lubricating liquid tank 34 stores the lubricating liquid to be supplied to the bearing clearance 50.

The dimensions of the bearing clearance 50 are determined so that the bearing 31 and the rotating shaft 11 can be lubricated by the lubricating liquid during operation of the turbo compressor 1a. The pair of elastic bodies 33 are disposed, for instance, outwardly of the partition 35 in the axial direction of the rotating shaft 11. Thus, an annular space 53 is defined by the pair of elastic bodies 33, the outer surface of the bearing 31, and the inner surface of the bearing housing 32. The bearing 31 has a supply flow path 54 by which the internal space of the lubricating liquid tank 34 and the annular space 53 communicate with each other. The bearing box 32 has a discharge flow path 55 that is in contact with the annular space 53, and extends to the outer surface of the bearing housing 32 in the axial direction of the rotating shaft 11.

The arrow in Fig. 2 conceptually illustrates the flow of the lubricating liquid. The lubricating liquid stored in the lubricating liquid tank 34 is introduced from the end of the bearing 31 away from the impeller 12 in the axial direction of the rotating shaft 11 to a bearing space 50. The rotating shaft 11 is supported, and the heat generated by rotation of the rotating shaft 11 is taken by the lubricating liquid that passes through the bearing space 50. Subsequently, the lubricating liquid is discharged from the bearing space 50. Also, the lubricating liquid stored in the lubricating liquid tank 34 is supplied to the first squeeze film damper D1 in the annular space 53 through the supply flow path 54. Subsequently, the lubricating liquid passes through holes 58 of the partition 35 or a clearance between the partition 35 and the pair of elastic bodies 33, and is supplied to the second squeeze film damper D2. Subsequently, the lubricating liquid is discharged from the annular space 53 to the outside of the bearing device 30 through the discharge flow path 55, and eventually to the outside of the turbo compressor 1a.

As illustrated in Fig. 1, the electric motor 40 includes a rotator 41, a stator 42, and a housing 43. The rotator 41 is a cylindrical member, and is shrink-fitted to the rotating shaft 11. The stator 42 is installed with a predetermined clearance between the outer surface of the rotator 41 and the stator 42. The outer surface of the stator 42 is fixed to the inner surface of the housing 43. The housing 43 is fixed to the housing 20 in the axial direction of the rotating shaft 11. The rotator 41 may be linked to rotating shaft 11, for instance, by coupling rather than shrink-fitting to the rotating shaft 11.

As illustrated in Fig. 1, an intake space 51, into which the cooling medium flows in the turbo compressor 1a, is formed by the outer surface of the impeller 12, the bearing housing 32, and the inner surface of the housing 20. The bearing box 32 has an intake path 52 that communicates with the intake space 51. The electric motor 40 is operated in the turbo compressor 1a, and thereby the rotating shaft 11 and the impeller 12 are rotated. Thus, the cooling medium flows into the intake space 51 through the intake path 52, and is introduced to the impeller 12. The cooling medium is compressed when passing through the impeller 12.

### (Modification)

The turbo compressor 1a may be modified from various viewpoints. For instance, the partition 35 may be made of rubber. In this case, the pair of elastic bodies 33 maybe omitted. When the partition 35 is made of rubber, the partition 35 forms a concave surface during positive squeeze of the first squeeze film damper D1 or the second squeeze film damper D2, and the viscous fluid forming a liquid film is unlikely to flow out from the squeeze film dampers. In addition, the partition 35 forms a convex surface during negative squeeze, and the viscous fluid which should form a liquid film is likely to flow out. Consequently, the first squeeze film damper D1 and the second squeeze film damper D2 can exhibit high damping performance.

A case is possible, where the rotating shaft 11 is supported by a pair of bearings including the bearing 31, and the distance between the pair of bearings is short. In this case, the inclination of the rotating shaft 11 is likely to be increased by the vibration of the rotating shaft 11 during an operation period of the turbo compressor 1a. However, when the partition 35 is made of rubber, the partition 35 can be deformed according to the inclination of the bearing 31, and thus the allowable inclination of the bearing 31 is easily increased. For this reason, even when the inclination of the rotating shaft 11 is large, it is possible to retard the reduction in the damping performance of the first squeeze film damper D1 or the second squeeze film damper D2 in association with the inclination of the bearing 31.

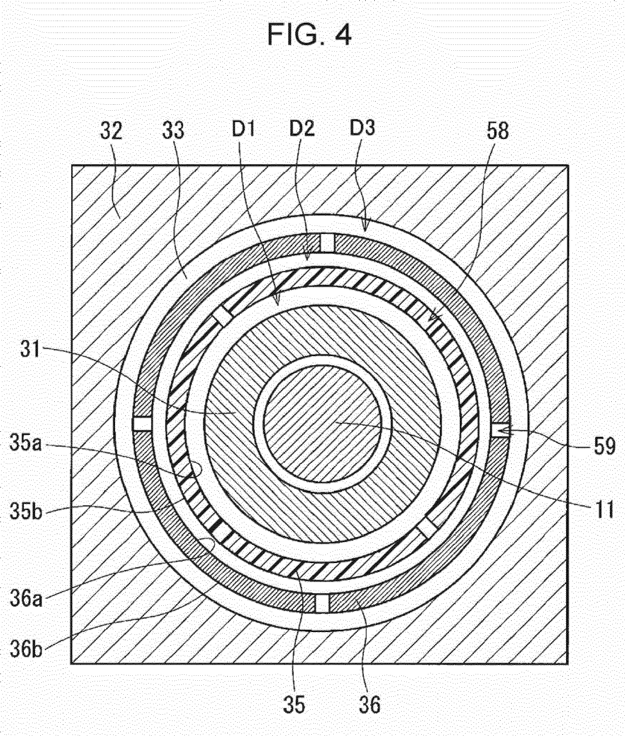

The turbo compressor 1a may be changed so that the turbo compressor 1a has three or more squeeze film dampers outwardly of the bearing 31 in the radial direction of the rotating shaft 11, for instance. For instance, the turbo compressor according to a modification illustrated in Fig. 4 further has a third squeeze film damper D3. The turbo compressor according to the modification further includes a partition 36 that separates the second squeeze film damper D2 and the third squeeze film damper D3. The partition 36 has an inner surface 36a and an outer surface 36b. The inner surface 36a defines the second squeeze film damper D2 between the outer surface 35b of the partition 35 and the inner surface 36a. In addition, the outer surface 36b defines the third squeeze film damper D3 between the inner surface 32a of the bearing housing 32 and the outer surface 36b. The partition 36 is composed of a sheet-like or a film-like member.

In the turbo compressor according to the modification, the partition 36 has through holes 59 that extend in the radial direction of the rotating shaft 11, for instance. Thus, viscous fluid is likely to be supplied from the second squeeze film damper D2 to the third squeeze film damper D3 or from the third squeeze film damper D3 to the second squeeze film damper D2. The through holes 59 are disposed displaced from the through holes 38 of the partition 35 in the circumferential direction of the rotating shaft 11, for instance. This causes the viscous fluid to flow over a relatively long distance, and thus the second squeeze film damper D2 and the third squeeze film damper D3 are likely to exhibit high damping performance. It is to be noted that depending on a situation, the through holes 58 and the through holes 59 may be arranged in a row in the radial direction of the rotating shaft 11.

### <Second Embodiment>

A turbo compressor 1b according to a second embodiment will be described. The turbo compressor 1b has the same configuration as that of the turbo compressor 1a unless particularly described. The same or corresponding components between the turbo compressor 1a and the turbo compressor 1b are labeled with the same symbol, and a detailed description is omitted. The description of the first embodiment (including the description of the modification) is also applicable to the second embodiment as long as no technical contradiction occurs.

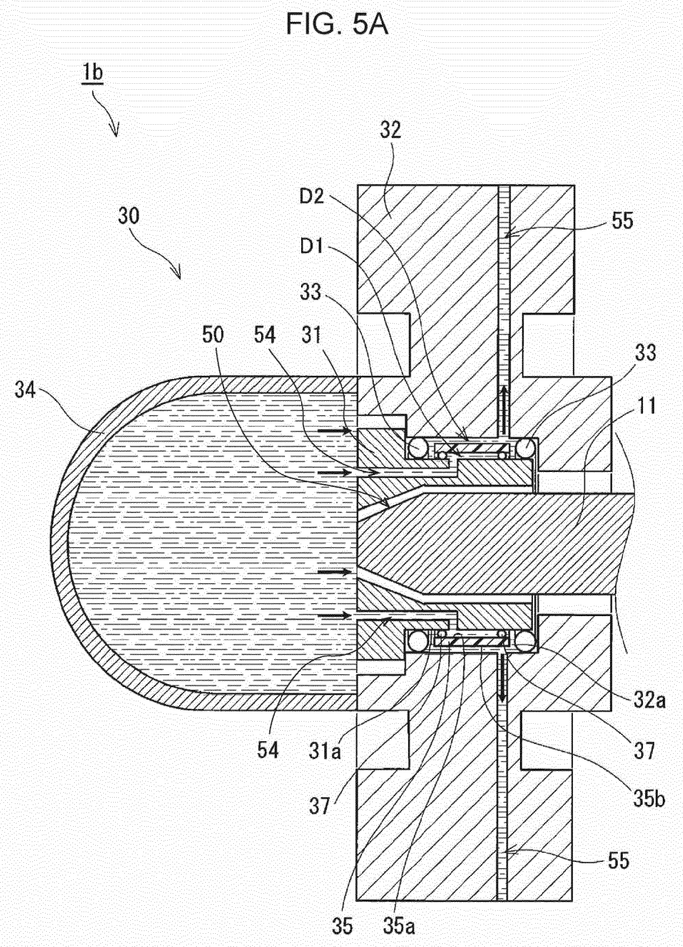

As illustrated in Fig. 5A, the turbo compressor 1b further includes a pair of inner-side elastic bodies 37. The pair of inner-side elastic bodies 37 are disposed apart from each other in the axial direction of the rotating shaft 11 between the outer surface 31a of the bearing 31 and the inner surface 35a of the partition 35. The pair of inner-side elastic bodies 37 support the partition 35. Thus, the inner surface 35a of the partition 35 can be prevented from coming into contact with the outer surface 35b of the bearing 31. Consequently, the first squeeze film damper D1 and the second squeeze film damper D2 are likely to exhibit desired damping performance.

### <Third Embodiment>

A turbo compressor 1c according to a third embodiment will be described. The turbo compressor 1c has the same configuration as that of the turbo compressor 1a unless particularly described. The same or corresponding components between the turbo compressor 1a and the turbo compressor 1c are labeled with the same symbol, and a detailed description is omitted. The description of the first embodiment (including the description of the modification) is also applicable to the third embodiment as long as no technical contradiction occurs.

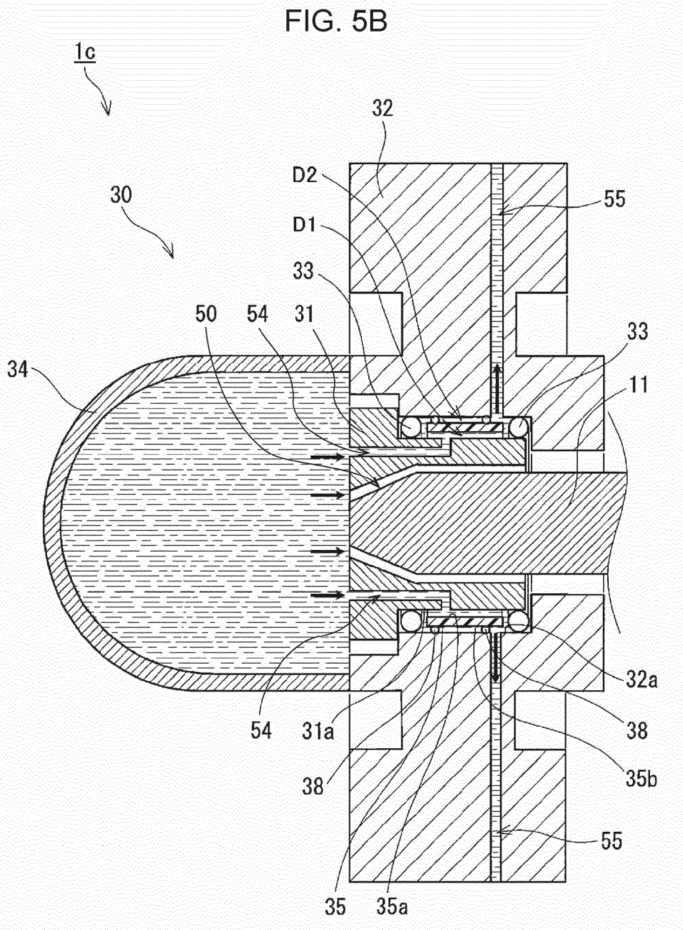

As illustrated in Fig. 5B, the turbo compressor 1c further includes a pair of outer-side elastic bodies 38. The pair of outer-side elastic bodies 38 are disposed apart from each other in the axial direction of the rotating shaft 11 between the inner surface 32a of the bearing housing 32 and the outer surface 35b of the partition 35. In the turbo compressor 1c, the outer surface 35b of the partition 35 can be prevented from coming into contact with the inner surface 32a of the bearing housing 32 by the pair of outer-side elastic bodies 38. Consequently, the first squeeze film damper D1 and the second squeeze film damper D2 are likely to exhibit desired damping performance.

### <Fourth Embodiment>

Next, a turbo compressor 1d according to a fourth embodiment will be described. The turbo compressor 1d has the same configuration as that of the turbo compressor 1a unless particularly described. The same or corresponding components between the turbo compressor 1a and the turbo compressor 1d are labeled with the same symbol, and a detailed description is omitted. The description of the first embodiment (including the description of the modification) is also applicable to the fourth embodiment as long as no technical contradiction occurs.

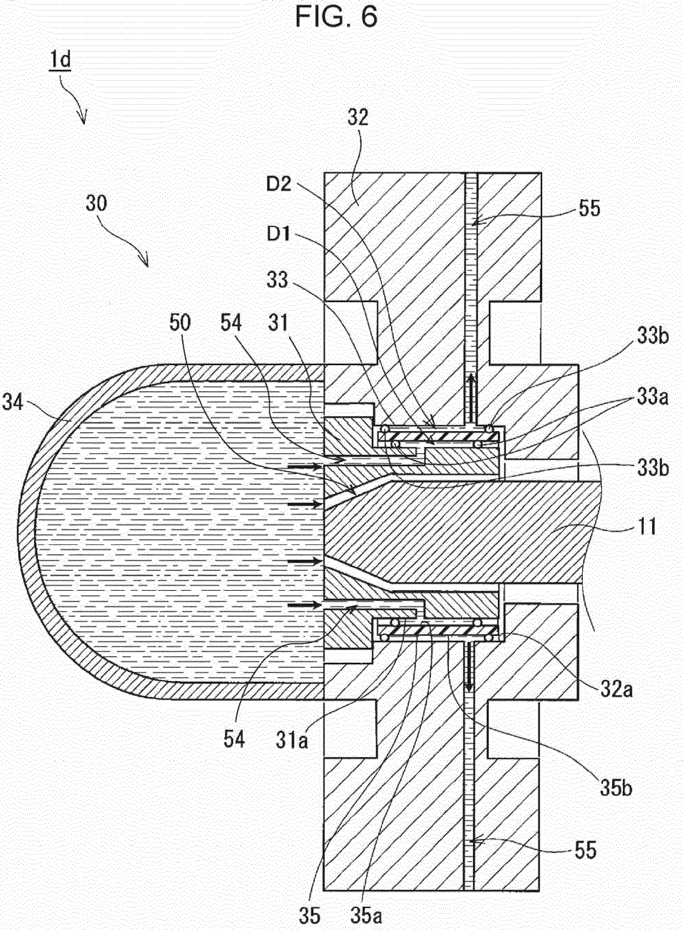

As illustrated in Fig. 6, in the turbo compressor 1d, at least one pair of elastic bodies 33 includes a pair of elastic bodies 33a, and a pair of elastic bodies 33b. The pair of elastic bodies 33a are in contact with the outer surface 31a of the bearing 31 and the inner surface 35a of the partition 35. The pair of elastic bodies 33b are in contact with the outer surface 35b of the partition 35 and the inner surface 32a of the bearing housing 32. In the turbo compressor 1d, the partition 35 can be prevented from coming into contact with the outer surface 31a of the bearing 31 and the inner surface 32a of the bearing housing 32, and thus the first squeeze film damper D1 and the second squeeze film damper D2 are likely to exhibit desired damping performance more reliably.

### <Fifth Embodiment>

Next, a turbo compressor 1e according to a fifth embodiment will be described. The turbo compressor 1e has the same configuration as that of the turbo compressor 1a unless particularly described. The same or corresponding components between the turbo compressor 1a and the turbo compressor 1e are labeled with the same symbol, and a detailed description is omitted. The description of the first embodiment (including the description of the modification) is also applicable to the fifth embodiment as long as no technical contradiction occurs.

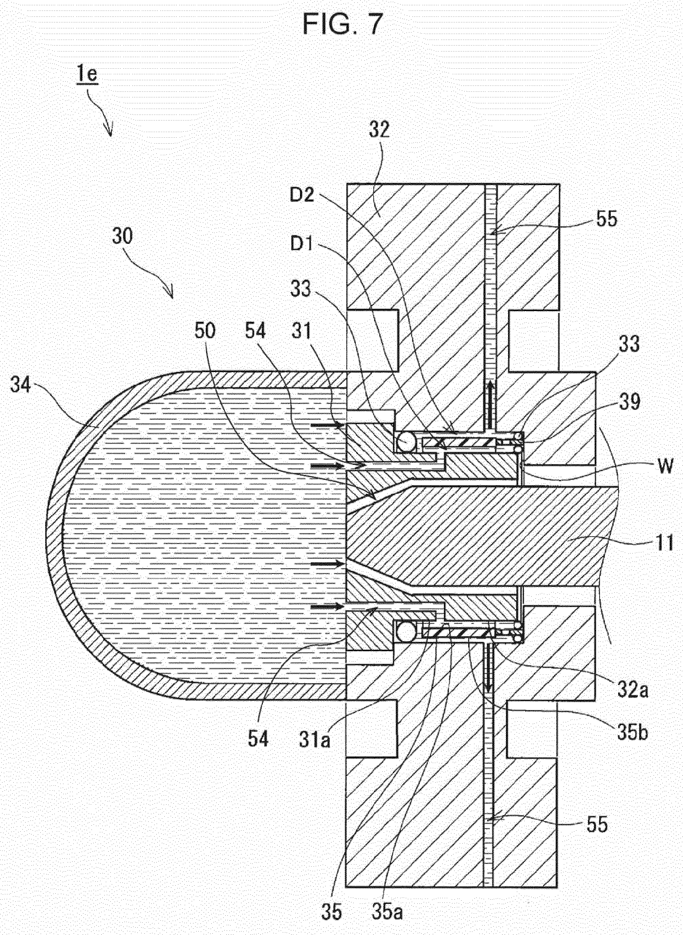

As illustrated in Fig. 7, the turbo compressor 1e further includes an elastic member 39. The elastic member 39 is a member that connects a wall surface W and the partition 35. The wall surface W is disposed at a position away from the partition 35 in the axial direction of the rotating shaft 11. In the turbo compressor 1e, the partition 35 is unlikely to come into contact with the outer surface 31a of the bearing 31 or the inner surface 32a of the bearing housing 32, and thus the first squeeze film damper D1 and the second squeeze film damper D2 are likely to exhibit desired damping performance.

The elastic member 39 is a thin plate in which multiple through holes are formed in the circumferential direction of the rotating shaft 11, for instance. Thus, the elastic member 39 has a desired bending elasticity. The elastic member 39 is fixed to the wall surface W.

The turbo compressor of the present disclosure is applicable to a heat pump, a freezer, and an air conditioner.

## Claims

1. A turbo compressor comprising:
a rotating shaft;
a cylindrical bearing that supports the rotating shaft at least in a radial direction; and
a partition having an inner surface and an outer surface, the inner surface defining a first squeeze film damper with an outer surface of the bearing in the radial direction of the rotating shaft, the outer surface defining a second squeeze film damper outwardly of the first squeeze film damper in the radial direction of the rotating shaft, the partition separating the first squeeze film damper and the second squeeze film damper.

2. The turbo compressor according to Claim 1, further comprising:
a bearing housing that has an inner surface disposed outwardly of the partition in the radial direction of the rotating shaft, and houses the bearing; and
at least one pair of elastic bodies that are disposed apart from each other in an axial direction of the rotating shaft and are in contact with the outer surface of the bearing and the inner surface of the bearing housing in the radial direction of the rotating shaft.

3. The turbo compressor according to Claim 1,
wherein the partition has a through hole that extends in the radial direction of the rotating shaft.

4. The turbo compressor according to Claim 1, further comprising
a pair of inner-side elastic bodies that are disposed apart from each other in the axial direction of the rotating shaft between the outer surface of the bearing and the inner surface of the partition.

5. The turbo compressor according to Claim 1, further comprising:
a bearing housing that has an inner surface disposed outwardly of the partition in the radial direction of the rotating shaft, and houses the bearing; and
a pair of outer-side elastic bodies that are disposed apart from each other in the axial direction of the rotating shaft between the inner surface of the bearing housing and the outer surface of the partition.

6. The turbo compressor according to Claim 2,
wherein the at least one pair of elastic bodies includes a pair of elastic bodies in contact with the outer surface of the bearing and the inner surface of the partition, and a pair of elastic bodies in contact with the outer surface of the partition and the inner surface of the bearing housing.

7. The turbo compressor according to Claim 1, further comprising
an elastic member that connects a wall surface disposed at a position away from the partition in the axial direction of the rotating shaft, and the partition.

8. The turbo compressor according to Claim 1,
wherein the partition is composed of rubber.
